# FASCICULE DE BREVET EUROPEEN

(11) **EP 3 519 689 B1**
(45) Date de publication et mention de la délivrance du brevet: **10.05.2023**
(21) Numéro de dépôt: 17787497.1
(22) Date de dépôt: 28.09.2017
(51) Int. Cl.: F02K 9/48, F02K 9/56, F04D 29/58

(54) **DISPOSITIF ET PROCÉDÉ DE MISE EN FROID**
VORRICHTUNG UND VERFAHREN ZUR KÜHLUNG
DEVICE AND METHOD FOR COOLING

(30) Priorité: 30.09.2016 FR 1659413
(43) Date de publication de la demande: 07.08.2019
(73) Titulaire: ArianeGroup SAS, 78130 Les Mureaux (FR)
(72) Inventeur: DURI, Davide, 27510 Pressagny L'Orgueilleux (FR)
(74) Mandataire: Cabinet Beau de Loménie
(86) Numéro de dépôt international: PCT/FR2017/052644
(87) Numéro de publication internationale: WO 2018/060633

(56) Documents cités:
- WO-A1-00/36351
- WO-A1-2013/088030
- FR-A1- 2 981 127
- US-A- 3 744 935
- US-A- 3 970 851
- US-A1- 2009 038 321
- US-A1- 2013 323 081

## Description

La présente invention concerne le domaine de la mise en froid des systèmes cryogéniques, et notamment des systèmes cryogéniques de propulsion.

Avant la mise en fonctionnement d'un système cryogénique, il est connu d'avoir une phase de mise en froid dans laquelle au moins des organes critiques du système cryogénique soient amenés d'une température ambiante à la température de fonctionnement nominal du système cryogénique, et ceci normalement de manière graduelle de façon à éviter un choc thermique lors de la mise en fonctionnement du système cryogénique.

Plus spécifiquement, dans un système cryogénique de propulsion, la mise en froid peut avoir l'objectif d'éviter l'apparition d'au moins les phénomènes suivants :
- cavitation dans au moins une pompe d'alimentation en ergol cryogénique, entraînant une survitesse de la pompe et une chute de performance,
- fragilisation des matériaux à cause des chocs thermiques,
- perte d'étanchéité suite à des gradients thermiques non maîtrisés,
- échauffement et divergence de paliers, et
- déséquilibres statiques et/ou dynamiques de pièces rotatives, à cause de jeux dans les paliers.

Ainsi, cette mise en froid est normalement finalisée quand certains critères fonctionnels sont remplis, comme par exemple une température de paroi, un seuil de jeu entre composants mécaniques, ou un autre critère lié à la tenue mécanique de composants tels que, entre autres, des paliers, des brides, des tirants ou des cannelures, ou au fonctionnement subséquent du système cryogénique (par exemple, la non cavitation de pompes, ou le remplissage subséquent reproductible de parties du système cryogénique avec un fluide cryogénique de fonctionnement homogène et monophasique). Ces critères fonctionnels, peuvent être transposés en critères mesurables de fin de mise en froid, utilisables dans des logiques de surveillance pour autoriser la mise en fonctionnement du système cryogénique.

Dans le domaine des systèmes cryogéniques de propulsion à réaction, les procédés de mise en froid sont principalement classifiés suivant trois classes : mise à froid par purge d'ergol cryogénique, mise à froid par recirculation forcée d'ergol cryogénique, et mise à froid avec un fluide cryogénique autre qu'un ergol. Parmi ces trois classes, la première, dans laquelle la circulation de l'ergol cryogénique peut être impulsée simplement par la surpression du réservoir d'ergol par rapport à l'extérieur, est la plus courante et peut notamment suivre une des trois séquences alternatives suivantes :
- circulation continue de l'ergol cryogénique du réservoir vers l'extérieur,
- circulation pulsée de l'ergol cryogénique, dans laquelle des vannes d'alimentation et des vannes de purge sont ouvertes et fermées de manière alternée pour piéger l'ergol cryogénique dans les éléments à mettre en froid pendant des périodes de barbotage,
- percolation de l'ergol cryogénique, dans laquelle les vannes d'alimentation sont ouvertes pendant que les vannes de purge restent fermées, pour maintenir, jusqu'à l'ouverture des vannes de purge en fin de mise en froid, l'ergol cryogénique dans le système cryogénique.

Parmi ces trois séquences, la première, bien que très rapide, présente l'inconvénient de consommer une grande quantité d'ergol cryogénique pour la mise en froid. La deuxième, bien qu'elle permette la mise en froid avec une moindre consommation d'ergol cryogénique, présente l'inconvénient de provoquer des fortes variations de pression dans le système cryogénique. La troisième est notamment utilisée pour la mise en froid, en vol, des moteurs-fusées Vinci^{®}, comme décrit dans les articles « Progress of the Vinci engine system engineering », P. Alliot et al., AIAA 2009-5038, et « Microgravity activities for the VINCI engine reignition capability », A. Pacros, J. Follet et B. Veille, Proceedings of the Microgravity Transport Processes in Fluids, Thermal, Biological and Material Sciences III, 2003, Davos, Suisse. Bien qu'elle soit plus économe en ergol cryogénique que la première séquence, sans l'inconvénient des fluctuations de pression de la deuxième, cette troisième séquence implique néanmoins aussi une consommation considérable, qu'il convient de réduire.

Ainsi, afin d'éviter la consommation d'ergol cryogénique pour la mise en froid, dans les procédés de mise en froid de la deuxième classe, une recirculation de l'ergol cryogénique à travers les zones du système cryogénique à mettre en froid avant un retour vers le réservoir est assurée par une pompe. Bien qu'on puisse ainsi éviter de consommer de l'ergol cryogénique pour la mise en froid, cette solution présente l'inconvénient d'une plus grande complexité technique, nécessitant notamment des moyens d'actionnement de la pompe.

Finalement, les procédés de mise en froid suivant la troisième classe évitent la consommation d'ergol cryogénique en utilisant à sa place un autre fluide cryogénique, de préférence inerte, pour mettre en froid le système cryogénique. Quand la mise en froid est au sol, cet autre fluide cryogénique peut provenir de réservoirs au sol. Un tel exemple est divulgué dans l'article « Cold flow testing of revised engine chilldown methods for the Atlas Centaur », J. Schuster et al., AIAA 96-3014. Cette solution présente néanmoins l'inconvénient de nécessiter une interface libérable entre la source de fluide cryogénique au sol et le système cryogénique de propulsion spatiale à bord du véhicule propulsé.

Par ailleurs, toutes ces alternatives pâtissent de l'inconvénient d'utiliser généralement, pour le cheminement du fluide cryogénique utilisé pour la mise en froid, des mêmes conduits et vannes utilisés ensuite pour le cheminement des ergols pendant le fonctionnement du système cryogénique de propulsion, conduits et vannes dont le dimensionnement est optimisé en fonction de cette utilisation, et non pas de la mise en froid.

Surtout, le mode de transfert de chaleur prédominant dans chacun de ces procédés, qui est celui de l'ébullition en film, est relativement peu efficace en ces conditions, puisqu'une partie considérable du fluide cryogénique utilisé n'entre pas en contact direct avec les éléments à refroidir et participe donc à peine à ce transfert de FR 2 981 127, US 2013/323081 et WO 2013/088030 divulguent des systèmes cryogéniques de propulsion comprenant une pompe d'alimentation en ergol cryogénique,

### Objet et résumé de l'invention

La présente divulgation vise à remédier à ces inconvénients, en proposant un système cryogénique de propulsion comprenant une pompe cryogénique et un dispositif de mise en froid qui permette d'assurer la mise en froid du système cryogénique avec une consommation limitée de fluide cryogénique, en permettant la maîtrise et la reproductibilité à la fois de la durée du refroidissement et de la localisation spatiale de l'action de refroidissement.

Pour cela, dans au moins un mode de réalisation, le dispositif de mise en froid comporte au moins un circuit d'alimentation en fluide cryogénique et une tuyère d'atomisation disposée en regard d'une zone à refroidir dans la pompe cryogénique et connectée audit circuit d'alimentation, la tuyère d'atomisation pouvant notamment prendre la forme d'un orifice avec un diamètre, par exemple, entre 250 µm et 1 mm. Grâce à cette disposition, il est possible de diriger un spray de fluide cryogénique vers une zone définie à refroidir dans la pompe cryogénique pour cibler spécifiquement des éléments critiques à refroidir dans le système cryogénique, comme par exemple des roulements, et exploiter le transfert de chaleur particulièrement efficace entre un tel spray et une surface d'impact dans la zone à refroidir, de manière à remplir rapidement, avec très peu de fluide cryogénique, et des moyens techniques simples, tous les critères fonctionnels et mesurables de mise en froid. La mise en froid desdits éléments critiques peut ainsi être priorisée et la durée de mise en froid réduite grâce à l'efficacité améliorée du transfert de chaleur.

Pour permettre de cibler simultanément plusieurs zones à refroidir, ce dispositif de mise en froid peut comprendre plusieurs tuyères d'atomisation connectées audit circuit d'alimentation.

Afin de mieux intégrer le dispositif de mise en froid dans le système cryogénique, au moins un conduit dudit circuit d'alimentation en fluide cryogénique peut être formé dans une paroi de carter. En effet, cette intégration permet de limiter l'encombrement du dispositif de mise en froid, tout en offrant une disposition particulièrement fonctionnelle de la tuyère d'atomisation. Noyé ainsi dans la masse de la paroi de carter, le conduit d'alimentation en fluide cryogénique ne peut interférer avec la disposition d'aucun autre élément du système cryogénique. L'éventuelle fabrication additive de la paroi de carter peut servir à faciliter cette incorporation du conduit d'alimentation dans la paroi de carter.

Le système cryogénique est un système cryogénique de propulsion, et surtout de propulsion à réaction, et la pompe est une pompe d'alimentation en ergol cryogénique. En effet, des telles pompes peuvent comprendre certains des éléments à mettre en froid en priorité, tels que paliers, joints d'étanchéité, aubes, carters et rouets.

Finalement, la présente divulgation concerne aussi un procédé de mise en froid d'un système cryogénique de propulsion comprenant une pompe cryogénique, le procédé comportant l'alimentation en fluide cryogénique, à travers un circuit d'alimentation, d'au moins une tuyère d'atomisation connectée au circuit d'alimentation et disposée en regard d'une zone à refroidir dans la pompe cryogénique, l'atomisation du fluide cryogénique, par l'au moins une tuyère d'atomisation, en spray de fluide cryogénique, et la projection du spray de fluide cryogénique vers au moins une surface d'impact dans la zone à refroidir.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique d'un système cryogénique de propulsion à réaction ;
- la figure 2 est une vue en coupe longitudinale d'une turbopompe d'alimentation en ergol cryogénique du système cryogénique de la figure 1, avec un carter incorporant un dispositif de mise en froid suivant un mode de réalisation de l'invention ;
- la figure 3 est une vue de détail d'éléments du dispositif de mise en froid et d'un conduit d'admission de la turbopompe de la figure 2 ; et
- la figure 4 illustre schématiquement l'effet d'un spray de fluide cryogénique émis par une tuyère du dispositif de mise en froid de la figure 2 sur une surface à refroidir.

### Description détaillée de l'invention

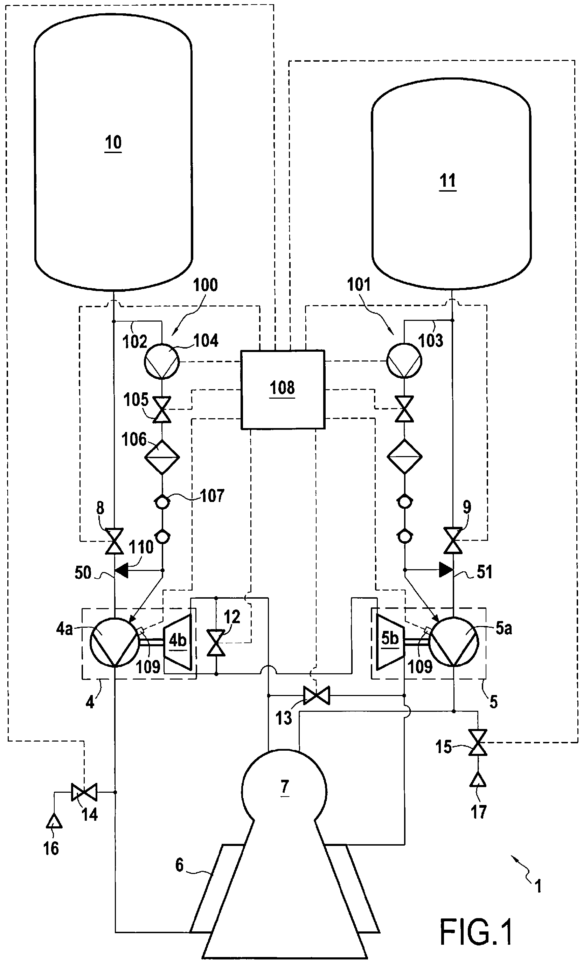

Le dispositif de mise en froid suivant la présente divulgation est applicable à la mise en froid de tout système cryogénique, mais notamment à la mise en froid de systèmes cryogéniques de propulsion, et plus particulièrement à celle des systèmes cryogéniques de propulsion à réaction, comme par exemple le moteur-fusée 1 illustré sur la figure 1. Dans le mode de réalisation illustré, le moteur-fusée 1 est un moteur-fusée à ergols liquides cryogéniques, comme par exemple hydrogène et oxygène liquides, et alimentation par turbopompes 4, 5, comprenant chacune une partie pompe 4a, 5a pour assurer la circulation d'un des ergols, et une partie turbine 4b, 5b, couplée à la partie pompe 4a,5a correspondante pour assurer son actionnement. Plus spécifiquement, le moteur-fusée 1 illustré est du type dit à cycle de détente (en anglais, « expander cycle »), dans lequel les parties turbine 4b, 5b sont elles-mêmes actionnées par l'un des ergols après son passage par un échangeur de chaleur régénératif 6 adjacent aux parois de la chambre propulsive 7 du moteur-fusée 1. Des vannes d'alimentation 8, 9 sont interposées entre les réservoirs 10, 11 contenant les propergols et les turbopompes correspondantes 4, 5, et des vannes de contournement 12, 13 permettent un contournement au moins partiel des parties turbine 4b, 5b par l'ergol chauffé par l'échangeur 6. Finalement, des vannes de purge 14, 15, situées sur des dérivations en aval de chaque partie pompe 4a, 4b, permettent d'ouvrir ces dérivations pour purger, à travers ces dérivations débouchant sur des tuyères de purge 16, 17, des fluides ayant traversé en amont les pompes 4a, 5a. Toutefois, l'invention n'est nullement limitée à la mise en froid de tels moteurs-fusées, et peut également être appliquée à la mise en froid d'autres types de systèmes cryogéniques de propulsion à réaction, et même à celle d'autres systèmes cryogéniques en général.

Pour la mise en froid de ce système cryogénique de propulsion, et plus spécifiquement pour la mise en froid des parties pompe 4a, 5a des turbopompes 4, 5, destinées à être directement en contact avec l'ergol cryogénique correspondant lors du fonctionnement du moteur-fusée 1, le moteur-fusée 1 comprend deux dispositifs de mise en froid 100, 101, un pour chaque ergol, comprenant chacun un circuit d'alimentation 102, 103 connecté au réservoir 10,11 correspondant. Chaque circuit d'alimentation 102, 103 est équipé d'une pompe 104, d'une vanne 105, d'un filtre 106 et d'au moins un clapet anti-retour 107. Les pompes 104 peuvent notamment être des motopompes équipées de moteurs électriques pour leur actionnement, comme illustré. Par ailleurs, ces pompes 104 et vannes 105 peuvent, comme les vannes d'alimentation 8, 9, de contournement 12, 13 et de purge 16, 17 être connectées à une unité de commande 108 pour leur commande. Cette unité de commande 108 est par ailleurs aussi connectée à des capteurs 109, qui peuvent notamment être des capteurs de température, aptes à mesurer des paramètres physiques pouvant servir comme critères mesurables de mise en froid.

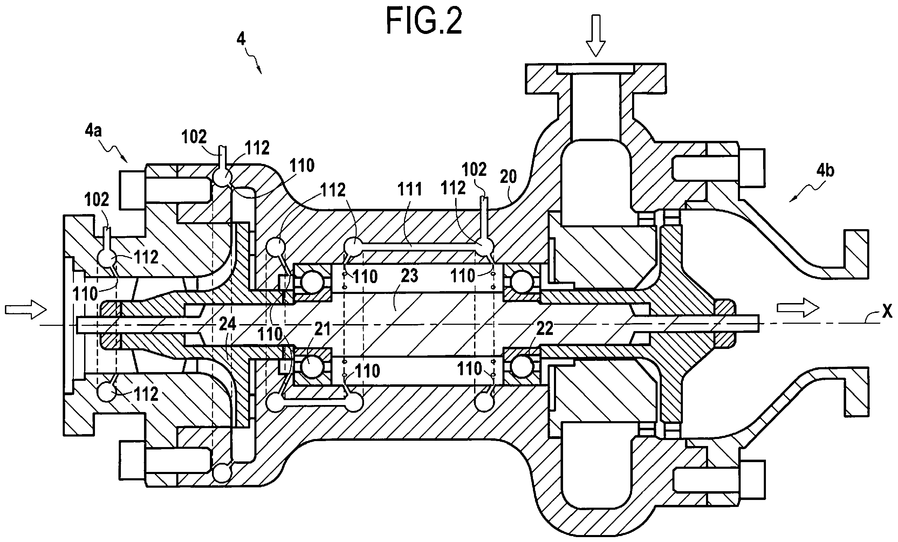

Les dispositifs de mise en froid 100, 101 comportent aussi des tuyères d'atomisation 110 connectées aux circuits d'alimentation 102, 103 correspondants. Dans le mode de réalisation illustré, des tuyères d'atomisation 110 sont situées dans les turbopompes 4, 5. La figure 2 illustre plus en détail la turbopompe 4. Comme on peut voir sur cette figure, le circuit d'alimentation 102 comprend aussi des conduits d'alimentation intégrés dans le carter 20 de la turbopompe 4, connectés au circuit 102 et débouchant sur des tuyères d'atomisation 110 à proximité d'éléments spécifiques de la partie pompe 4a de la turbopompe 4 à refroidir lors de la mise en fonctionnement. Plus spécifiquement, dans le mode de réalisation illustré, les tuyères d'atomisation 110 sont distribuées autour de l'axe central X de la turbopompe 4, en regard des paliers 21,22 soutenant l'arbre rotatif 23 de la turbopompe 4, ainsi que directement en amont et en aval du rouet 24 de la partie pompe 4a.

Dans ce mode de réalisation, le carter 20 peut être produit par fabrication additive, facilitant ainsi l'intégration des conduits d'alimentation dans ce carter 20, noyés dans la masse des parois du carter 20. Ces conduits d'alimentation peuvent être annulaires, afin notamment d'alimenter en fluide cryogénique plusieurs tuyères d'atomisation 110 distribuées autour de l'axe central X de la turbopompe 4, ainsi qu'axiaux, c'est-à-dire parallèles à cet axe central X, afin notamment d'alimenter plusieurs couronnes de tuyères d'atomisation 110 décalées axialement les unes par rapport aux autres. Par exemple, dans le mode de réalisation illustré, un conduit d'alimentation axial 111 relie deux conduits d'alimentation annulaires 112 pour l'alimentation de couronnes de tuyères d'atomisation 110 situées en regard des deux paliers 21,22. Le diamètre d des tuyères d'atomisation 110 peut être optimisé en fonction de la taille souhaitée pour les gouttelettes de fluide cryogénique à éjecter à travers ces tuyères d'atomisation 110. Ainsi, ce diamètre d peut être, par exemple, entre 250 µm et 1 mm. Bien que la figure 2 n'illustre que la turbopompe 4 et une partie du dispositif de mise en froid 100 pour l'ergol correspondant, le dispositif de mise en froid 101 pour l'autre ergol peut être essentiellement analogue, incorporant aussi des conduits d'alimentation et des tuyères d'atomisation dans le carter de la turbopompe 5.

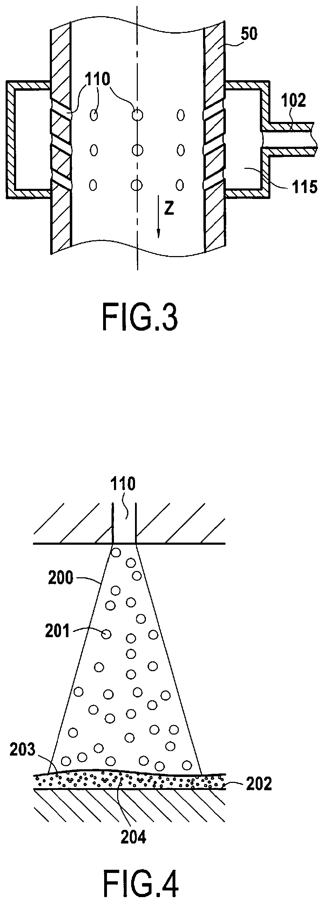

Bien que, dans les turbopompes 4, 5, les tuyères d'atomisation 110 soient directement en regard des zones spécifiques à refroidir au moment de la mise en froid, il est également envisageable d'incorporer des tuyères d'atomisation 110 ailleurs. Ainsi, dans le mode de réalisation illustré, d'autres tuyères d'atomisation 110 des dispositifs de mise en froid 100, 101 sont situées en amont des turbopompes 4, 5 correspondantes, dans les conduits d'admission 50,51 des parties pompe 4a, 5a de ces turbopompes 4, 5. Le conduit d'admission 50 est illustré en plus grand détail sur la figure 3. Comme on peut voir sur la figure, dans ce conduit d'admission 50, les tuyères d'atomisation 110 sont en communication avec le circuit d'alimentation 102 à travers une chambre annulaire 115 formée autour du conduit d'admission 50. Dans le mode de réalisation illustré, ces tuyères d'atomisation 110 sont inclinées en sens aval vers l'intérieur du conduit d'admission 50, afin de diriger leurs sprays en ce sens aval Z du conduit d'alimentation 50. Par ailleurs, afin de permettre l'injection d'un plus grand débit total de fluide cryogénique, plusieurs couronnes annulaires de tuyères d'atomisation 110 peuvent être arrangées, décalées les unes par rapport aux autres suivant l'axe central du conduit d'admission 50, comme illustré. Bien que la figure 3 n'illustre que le conduit d'admission 50 de la première turbopompe 4, le dispositif de mise en froid 101 pour l'autre ergol peut comprendre un arrangement essentiellement analogue autour du conduit d'admission 51 de la deuxième turbopompe 5.

En fonctionnement, pour la mise en froid des deux turbopompes 4,5, les dispositifs de mise en froid respectifs 100, 101 sont activés par l'unité de commande 108, actionnant les pompes 104 et ouvrant les vannes 105, de manière à faire circuler des débits d'ergols cryogéniques, à partir des réservoirs 10, 11 et à travers les circuits 102, 103 respectifs, vers les tuyères d'atomisation 110. Comme illustré sur la figure 4, le fluide cryogénique injecté ainsi au coeur de chaque turbopompe 4, 5 à travers les tuyères d'atomisation 110 forme un jet diphasique 200 de vapeur et de gouttelettes 201 de très petite taille qui vont impacter des surfaces 202 des zones à refroidir, pour former une fine couche liquide 203 sur ces surface 202. L'ébullition de cette fine couche liquide 203 va absorber une grande quantité de chaleur à partir de la surface 202. L'impact de nouvelles gouttelettes 201 du jet 200 sur la couche liquide 203 va encore promouvoir la nucléation et l'évacuation de bulles de vapeur 204 dans la couche liquide 203, ainsi que la convection dans cette même couche liquide 203, pour évacuer encore plus de chaleur de la surface 202. Ainsi, on peut obtenir un refroidissement très efficace de la surface 202 et de la matière sous-jacente, grâce à la vaporisation essentiellement complète du fluide cryogénique utilisé pour cette mise en froid. En aval des turbopompes, les vannes de purge 14, 15 sont ouvertes, de manière à permettre l'évacuation de la vapeur résultante à travers les tuyères de purge 16, 17. Quand l'unité de commande 108 détermine, à travers les paramètres mesurés par les capteurs 113, que des critères prédéterminés de mise en froid ont été remplis, les pompes 104 peuvent être arrêtées, et les vannes 105 fermées, ainsi que les vannes de purge 14, 15, pour procéder ensuite à l'ouverture des vannes d'alimentation 8, 9 et à l'arrivée des ergols, initialement propulsés par la pression interne des réservoirs 10, 11, jusque dans la chambre propulsive 7 du moteur-fusée 1. L'allumage du mélange d'ergols dans cette chambre propulsive 7 produira une combustion qui continuera à être alimentée en ergols grâce aux turbopompes 4, 5 actionnées par la détente de l'ergol chauffé dans l'échangeur de chaleur régénératif 6 adjacent aux parois de la chambre propulsive 7.

Les dispositifs de mise en froid peuvent être dimensionnés, et leur tuyères d'atomisation disposées suivant les connaissances dont on dispose concernant le refroidissement par spray, telles qu'exposées, par exemple, dans les documents « A universal approach to predicting température response of metallic parts to spray quenching », I. Urawar et T. Deiters, International Journal of Heat and Mass Transfer, Vol. 37, No. 3, pp. 341-362, 1994, « Validation of a Systematic Approach to Modelling Spray Quenching of Alluminum Alloy Extrusions, Composites and Continuous Castings », D.D. Hall, L. Mudawar, R.E. Morgan and S.L. Ehlers, JMEPEG (1997) 6 :77-92, « Modelling of Heat Transfer in a Mist/Steam Impinging Jet », X. Li, J.L. Gaddis, T. Wang, Transactions of the ASME 1086, Vol. 123, Décembre 2001, « Spray Cooling Droplet Impingement Model », P. J. Kreitzer et J. M. Kuhlman, AIAA 2010-4500, 10th AIAA/ASME Joint Thermophysics and Heat Transfer Conférence, 28 juin - 1 juillet 2010, Chicago, Illinois, US, « Analytical and computational methodology for modeling spray quenching of solid alloy cylinders », N. Mascarenhas, I. Mudawar, International Journal of Heat and Mass Transfer, 53 (2010) 5871-5883, "An Experimental and Computational Study of the Fluid Dynamics of Dense Cooling Air-Mists", J. I. Minchaca M., A. H. Castillejos E. et F. A. Acosta G. Advanced Fluid Dynamics, "Spray Cooling", Z. Yan, R. Zhao, F. Duan, T. N. Wong, K. C. Toh, K. F. Choo, P. K. Chan et Y. S. Chua, Two-Phase Flow, Phase Change and Numerical Modelling, 2011, "Spray Cooling for Land, Sea, Air and Space-Based Applications, a Fluid-Management System for Multiple Nozzle Spray Cooling and a Guide to High-Heat Flux Theater Design", B. S. Glassman, Florida Institute of Technology, 2001, "Gravity Effect on Spray Impact and Spray Cooling", T. Gambaryan-Roisman, O. Kyriopoulos, I. Roisman, P. Stephan et C. Tropea, Z-Tec Publishing, Bremen, Microgravity sci. technol. XIX-3/4 (2007), "Spray Cooling in Terrestrial and Simulated Reduced Gravity", C. A. Hunnell, J. M. Kuhlman et D.D. Gray, "Design of a Microgravity Spray Cooling Experiment", K. M. Baysinger, K. L. Yerkes, T. E. Michalak, R. J. Harris, J. McQuillen, AIAA Paper 2004-0966, 42nd AIAA Aerospace Sciences Conférence and Exhibit, 5-8 janvier 2004, Reno, Nevada, US, "Analysis of heat transfer in spray cooling systems using numerical simulations", M. Jafari, Electronic Theses and Dissertations, Paper 5028, 2014, "An Experimental Study of Steady-State High Heat Flux Removal Using Spray Cooling", J. B. Fillius, Naval Postgraduate School, décembre 2004, Monterey, California, US, "Experimental investigation of droplet dynamics and heat transfer in spray cooling"; W. Jia et H.H. Qiu, Experimental Thermal and Fluid Science, 27(2003) 829-838, "Spray velocity and drop size measurements in flashing conditions", R. Lecourt, P. Barricau et J. Steelant, Atomization and Spray 19(2):103-133, 2009, "Experimental and theoretical study of a monodisperse spray", J. E. Kirwan, T.A. Lee at al., J. Propulsion, Vol. 4, No. 4, juillet-août 1988, "Funamental studies in blow-down and cryogenic cooling", L. C. Chow et al., Report WL-TR-932128, Aeropropulsion and power directorate, Wright Laboratory, 1993.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Système cryogénique de propulsion (1) comprenant :
une pompe d'alimentation en ergol cryogénique (4,5), et
**caractérisé en ce qu'**il comporte en outre :
un dispositif (100,101) pour la mise en froid du système cryogénique de propulsion (1) avant la mise en fonctionnement du système cryogénique de propulsion (1), ledit dispositif (100,101) de mise en froid comportant un circuit (102,103) d'alimentation en fluide cryogénique et au moins une tuyère d'atomisation (110) disposée en regard d'une zone à refroidir dans la pompe d'alimentation en ergol cryogénique (4,5) et connectée audit circuit d'alimentation (102,103) pour diriger un spray de fluide cryogénique vers une surface d'impact (202) dans la zone à refroidir dans la pompe d'alimentation en ergol cryogénique.

2. Système cryogénique de propulsion (1) suivant la revendication 1, dans lequel la tuyère d'atomisation (110) présente la forme d'un orifice avec un diamètre entre 250 µm et 1 mm.

3. Système cryogénique de propulsion (1) suivant l'une quelconque des revendications 1 ou 2, comportant plusieurs tuyères d'atomisation (110) connectées audit circuit d'alimentation (102,103).

4. Système cryogénique de propulsion (1) suivant l'une quelconque des revendications précédentes, dans lequel au moins un conduit (111,112) dudit circuit (102,103) d'alimentation en fluide cryogénique est formé dans une paroi de carter (20).

5. Système cryogénique de propulsion (1) suivant la revendication 4, dans lequel ladite paroi de carter (20) est fabriquée par fabrication additive.

6. Système cryogénique de propulsion (1) suivant l'une quelconque des revendications 1 à 5, ladite pompe d'alimentation en ergol cryogénique (4,5) étant une turbopompe.

7. Procédé de mise en froid d'un système cryogénique de propulsion (1) comprenant une pompe d'alimentation en ergol cryogénique (4,5), le procédé étant **caractérisé en ce qu'**il permet la mise en froid du système cryogénique de propulsion (1) avant la mise en fonctionnement du système cryogénique de propulsion (1) et comporte :
l'alimentation en fluide cryogénique, à travers un circuit d'alimentation (102,103), d'au moins une tuyère d'atomisation (110) connectée au circuit d'alimentation (102,103) et disposée en regard d'une zone à refroidir dans la pompe d'alimentation en ergol cryogénique (4,5),
l'atomisation du fluide cryogénique, par l'au moins une tuyère d'atomisation (110), en spray (200) de fluide cryogénique, et
la projection du spray (200) de fluide cryogénique vers au moins une surface d'impact (202) dans la zone à refroidir.

## Patentansprüche

1. Kryogenes Antriebssystem (1), umfassend:
eine Pumpe (4, 5) zur Versorgung mit kryogenem Raketentreibstoff, und
**dadurch gekennzeichnet, dass** es ferner beinhaltet:
eine Vorrichtung (100, 101) zur Kühlung des kryogenen Antriebssystems (1) vor der Inbetriebnahme des kryogenen Antriebssystems (1), wobei die Kühlungsvorrichtung (100, 101) einen Kreislauf (102, 103) zur Versorgung mit kyrogenem Fluid und mindestens eine Zerstäubungsdüse (110) beinhaltet, die einer in der Pumpe (4, 5) zur Versorgung mit kryogenem Raketentreibstoff zu kühlenden Zone gegenüberliegend angeordnet ist und mit dem Versorgungskreislauf (102, 103) verbunden ist, um ein Sprühen von kryogenem Fluid hin zu einer Auftreffoberfläche (202) in der in der Pumpe zur Versorgung mit kryogenem Raketentreibstoff zu kühlenden Zone zu richten.

2. Kryogenes Antriebssystem (1) nach Anspruch 1, wobei die Zerstäubungsdüse (110) die Form einer Öffnung mit einem Durchmesser von zwischen 250 µm und 1 mm aufweist.

3. Kryogenes Antriebssystem (1) nach einem der Ansprüche 1 oder 2, das mehrere Zerstäubungsdüsen (110) beinhaltet, die mit dem Versorgungskreislauf (102, 103) verbunden sind.

4. Kryogenes Antriebssystem (1) nach einem der vorhergehenden Ansprüche, wobei die mindestens eine Leitung (111, 112) des Kreislaufs (102, 103) zur Versorgung mit kryogenem Fluid in einer Gehäusewand (20) gebildet ist.

5. Kryogenes Antriebssystem (1) nach Anspruch 4, wobei die Gehäusewand (20) durch additive Fertigung gefertigt ist.

6. Kryogenes Antriebssystem (1) nach einem der Ansprüche 1 bis 5, wobei die Pumpe (4, 5) zur Versorgung mit Raketentreibstoff eine Turbopumpe ist.

7. Verfahren zur Kühlung eines kryogenen Antriebssystems (1), das eine Pumpe (4, 5) zur Versorgung mit kryogenem Raketentreibstoff umfasst, wobei das Verfahren **dadurch gekennzeichnet ist, dass** es die Kühlung des kryogenen Antriebssystems (1) vor der Inbetriebnahme des kryogenen Antriebssystems (1) zulässt und beinhaltet:
die Versorgung mindestens einer Zerstäubungsdüse (110), die mit einem Versorgungskreislauf (102, 103) verbunden ist und einer in der Pumpe (4, 5) zur Versorgung mit kryogenem Raketentreibstoff zu kühlenden Zone gegenüberliegend angeordnet ist, mit kryogenem Fluid durch den Versorgungskreislauf (102, 103),
die Zerstäubung des kryogenen Fluids durch die mindestens eine Zerstäubungsdüse (110) in ein Sprühen (200) von kryogenem Fluid und das Schleudern des Sprühens (200) von kryogenem Fluid hin zu mindestens einer Auftreffoberfläche (202) in der zu kühlenden Zone.

## Claims

1. A cryogenic propulsion system (1) comprising:
a cryogenic propellant feed pump (4,5), and
**characterized in that** it further includes:
a chilldown device (100, 101) for chilling down the cryogenic propulsion system (1) before putting the cryogenic propulsion system (1) into operation, said chilldown device (100, 101) comprising a cryogenic fluid feed circuit (102, 103) and at least one atomizing nozzle (110) situated facing a zone for cooling in the cryogenic propellant feed pump (4,5) and connected to said feed circuit (102, 103) in order to direct a spray of cryogenic fluid against an impact surface (202) in a zone for cooling in the cryogenic propellant feed pump.

2. A device (100, 101) according to claim 1, wherein the atomizing nozzle (110) is in the form of an orifice with a diameter lying in the range 250 µm to 1 mm.

3. A device (100, 101) according to claim 1 or claim 2, including a plurality of atomizing nozzles (110) connected to said feed circuit (102, 103).

4. A device (100, 101) according to any preceding claim, wherein at least one duct (111, 112) of said cryogenic fluid feed circuit (102, 103) is formed in a casing wall (20) .

5. A device (100, 101) according to claim 4, wherein said casing wall (20) is made by additive fabrication.

6. A cryogenic system (1) according to any one of claims 1 to 5, said cryogenic pump (4, 5) being a turbopump.

7. A method of chilling down a cryogenic propulsion system (1), comprising a cryogenic propellant feed pump (4,5) the method being **characterized in that** it allows chilldown of the cryogenic propulsion system (1) before putting into operation the cryogenic propulsion system (1) and comprises:
- feeding cryogenic fluid, via a feed circuit (102, 103), to at least one atomizing nozzle (110) connected to the feed circuit (102, 103) and situated facing a zone for cooling in the cryogenic propellant feed pump (4,5);
- atomizing the cryogenic fluid, by the at least one atomizing nozzle (110), so as to form a spray (200) of cryogenic fluid; and
- projecting the spray (200) of cryogenic fluid against at least one impact surface (202) in the zone for cooling.
